(19) Europäisches Patentamt
European Patent Office
Office européen des brevets

(11) **EP 1 718 118 B1**

(12) **EUROPEAN PATENT SPECIFICATION**

(45) Date of publication and mention
of the grant of the patent:
**15.04.2009 Bulletin 2009/16**

(51) Int Cl.:
*H05B 6/02* (2006.01)    *H05B 6/10* (2006.01)
*C21D 1/42* (2006.01)    *C21D 9/02* (2006.01)

(21) Application number: **04713182.6**

(22) Date of filing: **20.02.2004**

(86) International application number:
**PCT/JP2004/001974**

(87) International publication number:
**WO 2005/081586 (01.09.2005 Gazette 2005/35)**

(54) **METHOD AND DEVICE FOR INDUCTION HEATING AND HARDENING APPARATUS**

VERFAHREN UND EINRICHTUNG ZUR INDUKTIONSERWÄRMUNG UND
HÄRTUNGSVORRICHTUNG

PROCEDE ET DISPOSITIF POUR CHAUFFAGE PAR INDUCTION ET APPAREIL DE
DURCISSEMENT

(84) Designated Contracting States:
**DE FR GB IT**

(43) Date of publication of application:
**02.11.2006 Bulletin 2006/44**

(73) Proprietor: **Neturen Co., Ltd.**
**Tokyo 141-8639 (JP)**

(72) Inventors:
• **OKA, Kazutomi,**
**Neturen Co., Ltd.**
**Hiratsuka-shi,**
**Kanagawa 254-0013 (JP)**

• **IKUTA, Fumiaki,**
**Neturen Co., Ltd.**
**Hiratsuka-shi,**
**Kanagawa 254-0013 (JP)**

(74) Representative: **Strehl Schübel-Hopf & Partner**
**Maximilianstrasse 54**
**80538 München (DE)**

(56) References cited:
EP-A- 0 052 250        JP-A- 7 220 863
JP-A- 8 001 271        JP-A- 49 079 906
JP-A- 53 099 014       JP-A- 55 031 211
JP-A- 2000 017 325     JP-A- 2000 326 036
JP-U- 60 186 939       US-A1- 2 490 206
US-A1- 3 836 743       US-B1- 6 174 390

**Description**

TECHNICAL FIELD

The present invention relates to a method for induction heating a helix-shaped coiled member and an apparatus therefor, and relates also to a quench-hardening apparatus for induction hardening the coiled member.

BACKGROUND TECHNIQUE

Various methods are known for induction heating of steel. In one of the induction heating methods, a helix-shaped workpiece is placed inside a heating coil wound in a solenoid shape coaxially, and the helix-shaped workpiece is induction heated. By this method, however, the helix-shaped workpiece cannot be uniformly heated since the both end portions of the helix-shaped workpiece may be shortcircuited to cause overheating. In another known induction heating method, an induction heating coil is brought close to a part of a helix-shaped workpiece to induction heat the part of the workpiece, and the workpiece is rotated to bring the other portions of the workpiece close to the induction heating coil to induction heat the entire of the workpiece to a prescribed temperature. This method requires a driving mechanism like a motor for rotating the workpiece-supporting member disadvantageously.

US 2 490 206 A1 discloses heat treating method with the features of the preamble of claim 1 of the present invention.

DISCLOSURE OF THE INVENTION

In the above-described former method of induction heating the helix-shaped workpiece placed inside the induction heating coil coaxially, the end portions of the helix-shaped workpiece tend to be overheated. In the other above-described latter method of partial induction heating of the workpiece by placing the induction heating coil close to a part of the workpiece, long time is necessary for inserting and removing the workpiece, which is not suitable for highspeed processing, and the electric power consumption is larger correspondingly.

Therefore, the present invention intends to provide an induction heating method and an induction heating apparatus for induction heating a helix-shaped coiled member successively and entirely uniformly, and to provide a quench-hardening apparatus for hardening uniformly a coiled member.

For achieving the above object, the induction heating method of the present invention comprises

(1) placing an induction heating coil to surround helically a delivery path for delivering the coiled member, and
(2) delivering the coiled member by rolling along the delivery path to induction heat the coiled member by the induction heating coil.
(3) The induction heating coil has a portion which surrounds helically a delivery face for delivering the coiled member by contact.
(4) The induction heating coil wound in a helix may cross the delivery direction of the delivery path to surround helically the delivery path and may extend in the direction of the delivery, and
(5) the coiled member may be delivered by rolling with the length direction of the coiled member directed to be perpendicular to the delivery direction.
(6) The coiled member may be delivered by rolling by rotation in a periphery direction of the coiled member.
(7) The delivery path for delivering the coiled member by rolling may be inclined.
(8) A middle-lifting means having ridges at a prescribed pitch along the delivery path are provided for supporting the coiled member upward at a lengthwise middle portion of the coiled member and for moving vertically the coiled member, and
(9) a pair of end-lifting means having ridges at a prescribed pitch along the delivery path are provided for supporting the coiled member upward at both lengthwise end portions and for moving vertically the coiled member, the ridges of the middle-lifting means and the ridges of the end-lifting means being placed in alternate positions; and
(10) the coiled member is delivered by moving vertically reciprocally the middle-lifting means and the end-lifting means in alternate directions to allow the coiled member to roll on slopes of the ridges.
(11) The pitch of the ridges of the middle-lifting means and of the end-lifting means is designed not to cause one or half rotation of the coiled member in delivery by rolling, and
(12) the coiled member is delivered by rolling by vertically moving the middle-lifting means and the pair of the end-lifting means.
(13) The coiled member may have the outside diameter increasing from the one lengthwise end toward the other lengthwise end, and
(14) the one end-lifting means for supporting one lengthwise end may be placed higher than the other end-lifting means for supporting the other lengthwise end.

(15) The coiled member may have the outside diameter increasing from the one lengthwise end toward the other lengthwise end, and

(16) the one end-lifting means for supporting the one lengthwise end may be placed higher than the other end-lifting means for supporting the other lengthwise end by inclining the end-lifting means and the middle-lifting means in a direction perpendicular to the delivery path.

(17) A side wall may be provided which rises at the respective edges in the width direction of the delivery path, and

(18) the coiled member which may have a cut face at the respective ends of a predetermined length in the length direction, and

(19) the coiled member may be allowed to roll without contact at the cut face with the side wall.

(20) The coiled member may have the outside diameter differing between the one lengthwise end and the other lengthwise end, and

(21) the one end-lifting means for supporting the one lengthwise end and the other end-lifting means for supporting the other lengthwise end may be placed to hold the centers of the one end-lifting member and of the other end-lifting member at the same height.

(22) The coiled member has the outside diameter differing between the one lengthwise end and the other lengthwise end, and

(23) the one end-lifting means for supporting the one lengthwise end and the other end-lifting means for supporting the other lengthwise end may be placed to hold the centers of the one end of the coiled member and the center of the other end of the coiled member at the same height by inclining the end-lifting means and the middle-lifting means in a direction perpendicular to the delivery path.

(24) Instead of moving vertically the both of the middle-lifting means and the pair of the end-lifting means in alternate directions,

(25) only one of the middle-lifting means and the pair of the end-lifting means may be moved vertically and the other may be fixed, thereby delivering the coiled member by rolling on the slopes of the ridges.

The induction heating apparatus of the present invention comprises

(26) a delivery means for delivering a helix-shaped coiled member by rolling, and

(27) an induction heating means for induction heating the coiled member being delivered by the delivery means.

(28) The delivery means may deliver the coiled member by rolling by rotation in direction of the periphery thereof.

(29) The delivery means comprise a middle-lifting means having ridges at a prescribed pitch along the delivery path for supporting the coiled member upward at a lengthwise middle portion of the coiled member and for lifting vertically the coiled member, and

(30) a pair of end-lifting means having ridges at a prescribed pitch along the delivery path for supporting the coiled member upward at both lengthwise end portions and for moving vertically the coiled member, and

(31) the ridges of the middle-lifting means and the ridges of the end-lifting means being placed alternately; and the coiled member being delivered by moving vertically reciprocally the middle-lifting means and the end-lifting means in alternate directions to allow the coiled member to roll on slopes of the ridges.

(32) Instead of moving vertically the both of the middle-lifting means and the pair of the end-lifting means in alternate directions,

(33) only one of the middle-lifting means and the pair of the end-lifting means may be moved vertically and the other is fixed thereby delivering the coiled member by rolling on slopes of the ridges.

(34) The pitch of the ridges of the middle-lifting means and of the end-lifting means are designed not to cause one or half rotation of the coiled member between the ridges in delivery by rolling.

(35) The pair of the end-lifting members may be constituted of one end-supporting means for supporting one lengthwise end of the coiled member and the other end-supporting means for supporting the other lengthwise end thereof, and

(36) the one end-supporting member may be placed at a level higher than the other end-supporting member.

(37) The pair of the end-lifting members may be constituted of one end-supporting means for supporting one lengthwise end of the coiled member and the other end-supporting means for supporting the other lengthwise end thereof, and

(38) the pair of the end-lifting members and the middle-supporting member may be inclined to place the one end-supporting member at a level higher than the other end-supporting member.

(39) A pair of side walls may be provided which rise at the edges in the width direction of the delivery path, and

(40) the coiled member may have a cut face at the respective cut ends formed at cutting in a predetermined length in the length direction, and

(41) the coiled member may be allowed to roll without contact at the cut face with the side walls.

The quench-hardening apparatus of the present invention comprises

(42) any of the induction heating apparatus set forth above, and

(43) a quenching vessel for quenching the coiled member having been heated to a prescribed hardening temperature by the induction heating apparatus.

BRIEF DESCRIPTION OF THE DRAWINGS

Fig. 1 is a schematic drawing illustrating a quench-hardening apparatus of the present invention.
Fig. 2 is a perspective view illustrating schematically a delivery unit for delivering a coiled member.
Fig. 3 is a front view of the delivery unit shown in Fig. 2.
Fig. 4 is a side view of the delivery unit shown in Fig. 2.
Fig. 5 is a plan view of the delivery unit shown in Fig. 2.
Fig. 6 is a schematic view of a part of a middle-lifting board and end-lifting boards.
Fig. 7 is a front view of the delivery unit of the induction heating apparatus employed in Example 2.
Fig. 8 is a front view of the delivery unit of the induction heating apparatus employed in Example 3.

BEST MODE FOR CARRYING OUT THE INVENTION

The present invention provides an induction heating method and an induction heating apparatus for induction heating a coiled member, and provides also a quench-hardening apparatus for induction hardening the coil member, the coil member including automobile suspension springs, valve springs of automobile engines, suspension springs of front folks of bicycles and motorcycles, and coil springs of industrial machines.

EXAMPLE 1

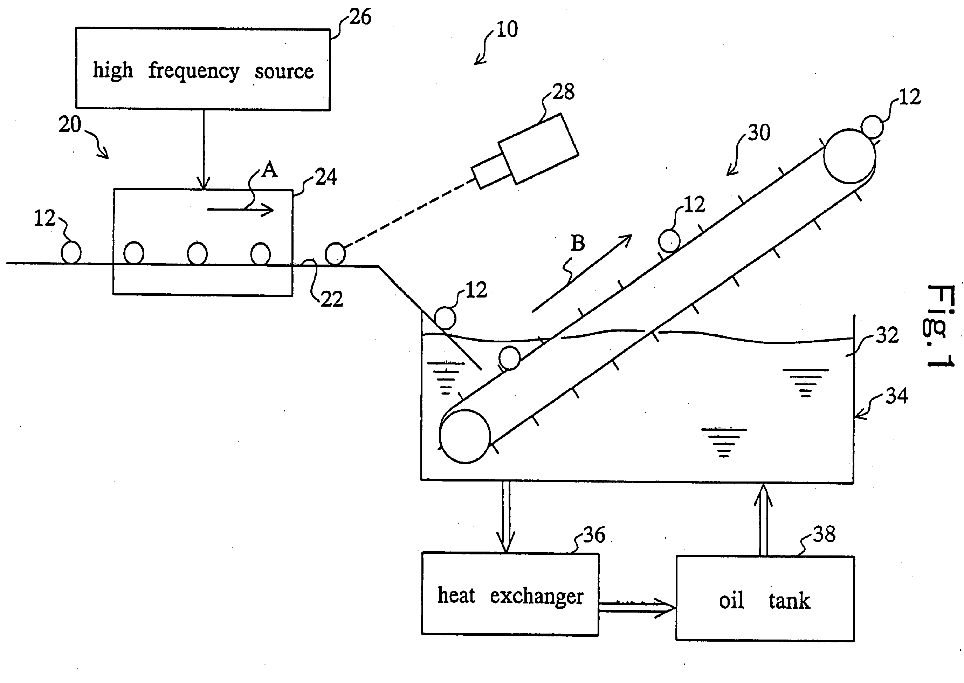

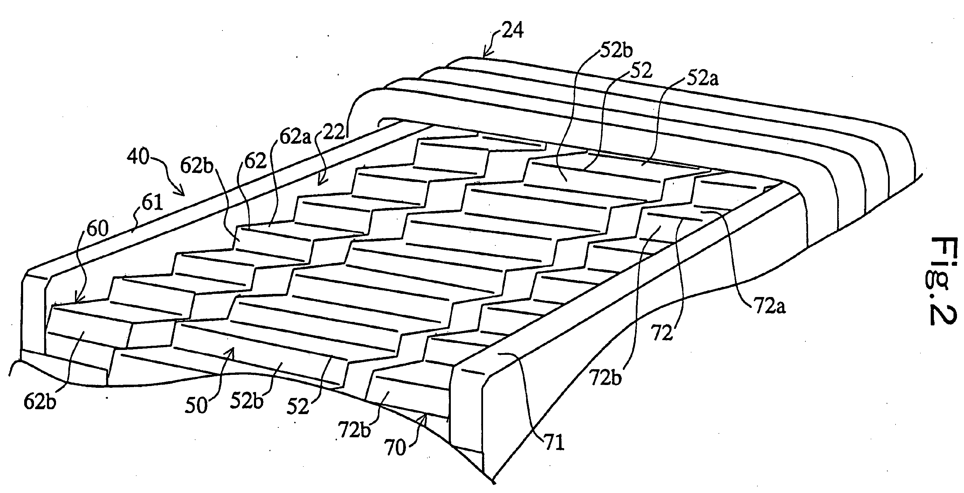

A quench-hardening apparatus of the present invention is explained by reference to Fig. 1.
Fig. 1 is a drawing illustrating schematically a quench-hardening apparatus of the present invention.
The quench-hardening apparatus 10 comprises a heating zone 20 for induction heating a coiled member 12 to a hardening temperature, and a quenching zone 30 for quenching the coiled member 12 having been induction heated to the hardening temperature.
The heating zone 20 is provided with a delivery path 22 for delivering the coiled member 12 by rolling in the arrow-A direction (delivery direction), and an induction heating coil 24 for induction heating the coiled member 12 delivered by rolling. The coiled members 12 to be induction heated are placed with the length direction kept to be perpendicular to the delivery direction, and are delivered along the delivery path 22 successively at prescribed intervals by rolling by rotation in the coil periphery direction. The induction heating coil 24 is connected to a high frequency source 26. The temperature of the coiled member 12 having passed through the induction heating coil 24 is measured by a non-contact type temperature sensor 28 to control the power of the high frequency source 26 to heat the coiled member 12 up to the prescribed hardening temperature.
The quenching zone 30 is provided with a quenching vessel 34 containing a quenching liquid 32 for quenching the coiled member 12 having been heated to the hardening temperature, and a delivery belt 35 for taking up the coiled member 12 having been introduced from the delivery path 22 into the quenching vessel 34 and been quenched by the quenching liquid 32, in the arrow-B direction to deliver it to the subsequent processing step. The quenching liquid 32 in the quenching vessel 34 is circulated through a heat exchanger 36 and an oil tank 38 to keep the prescribed temperature of the quenching liquid. In the quench-hardening apparatus 10, many coiled members 12 are delivered by rolling on the delivery path 22 and quench-hardened successively. Therefore, this quench-hardening apparatus is suitable for mass production.
The delivery unit constituted of the delivery path 22 along which the coiled members 12 are delivered by rolling is explained below by reference to Figs. 2-5.

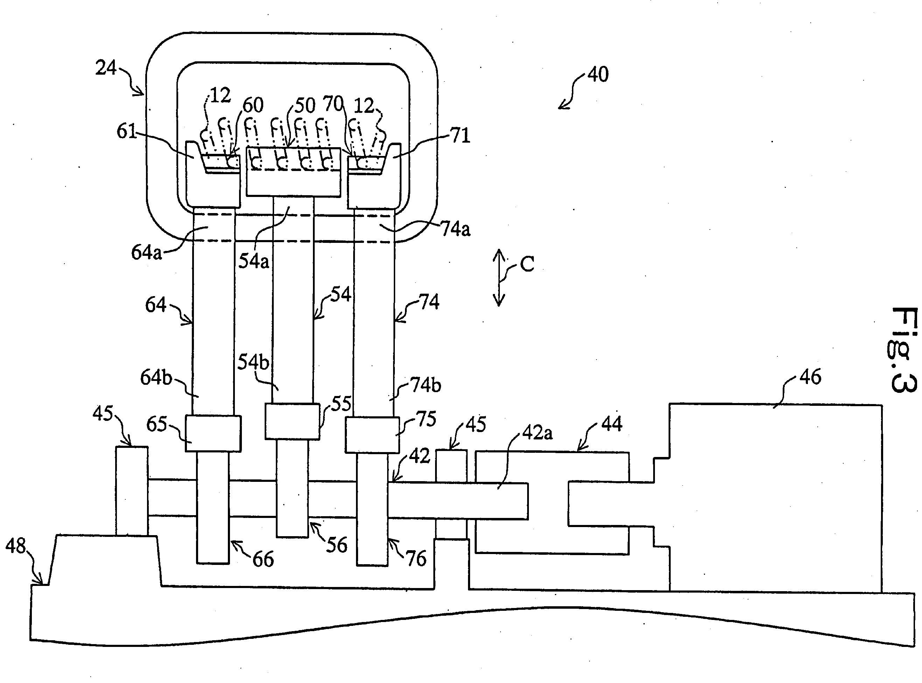

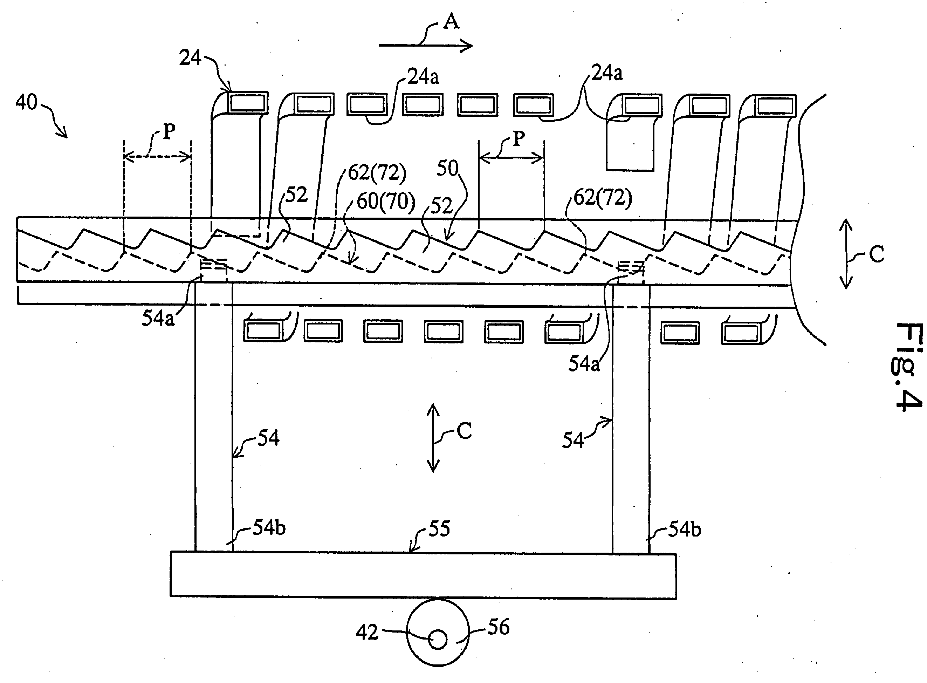

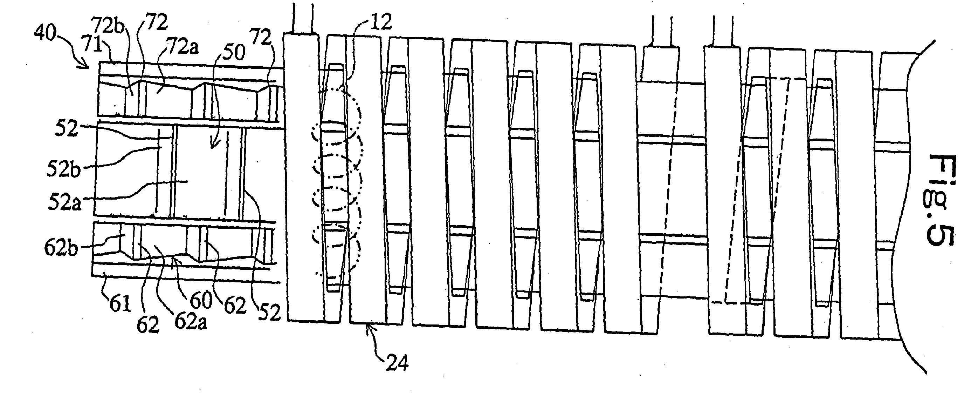

Fig. 2 is an enlarged perspective view of a part of a delivery unit for delivering the coiled member. Fig. 3 is a front view of the delivery unit shown in Fig. 2. Fig. 4 is a side view of the delivery unit shown in Fig. 2. Fig. 5 is a plan view of the delivery unit shown in Fig. 2.
The delivery unit 40 has a middle-lifting board 50 (an example of the middle-lifting means in the present invention) and a pair of end-lifting boards 60,70 (an example of the end-lifting means in the present invention): the middle-lifting board 50 being made of a ceramic material, supporting the lengthwise center portion of the coil members 12 on the delivery path 22 upward from the lower side, and pulsating vertically; and the end-lifting boards 60,70 being made of a ceramic material, supporting the both ends of the coil members 12 on the delivery path 22 upward, and pulsating vertically. The middle-lifting board 50 and the end-lifting boards 60,70 constitute a delivery path 22. The middle-lifting board 50 and the pair of the end-lifting boards 60,70 are allowed to pulsate vertically in alternate up-and-down directions. That is, when the middle-lifting board 50 is moved upward, the pair of the end-lifting boards 60,70 are moved downward, whereas when the middle-lifting board 50 is moved downward, the pair of the end-lifting boards 60,70 are moved upward.

In the above example, the middle-lifting board 50 is moved vertically in the direction reverse to the movement of the pair of the end-lifting boards 60,70. Instead, either the middle-lifting board 50 or the pair of the end-lifting boards 60,70 may be allowed to pulsate vertically with the other being fixed to deliver the coiled members 12 by rolling on the slopes of the ridges 52,62,72 as mentioned later.

The constituting material of the middle-lifting board 50 and the pair of the end-lifting boards 60,70 is preferably electro-insulating and heat-resistant. The induction heating coil 24 has a portion 24a confronting the delivery path 22.

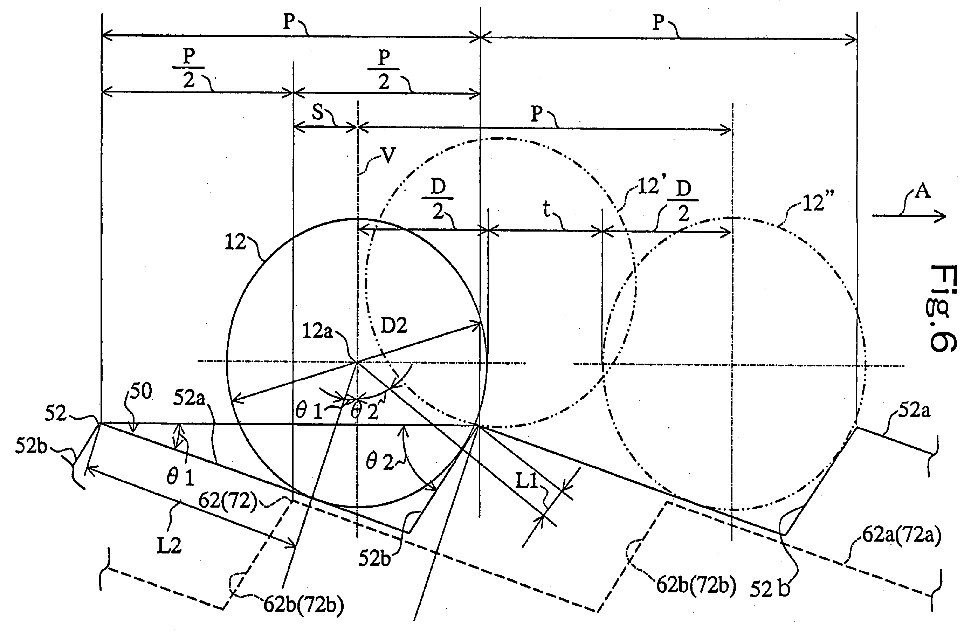

The middle-lifting board 50 has a width corresponding to nearly a half length of the coiled member 12 delivered along the delivery path 22 as shown in Figs. 3 and 5. The term "width" herein signifies the length perpendicular to the delivery direction (arrow-A direction). The middle-lifting board 50 has ridges 52 on the top face thereof at a predetermined pitch P along the delivery path (perpendicular to the delivery direction) as shown in Figs. 4 and 5. The term "pitch" herein signifies the distance between the tops of adjacent ridges 52. The pitch P and the height of the ridges 52 are designed suitably for the outside diameter of the coiled member 12 to be delivered. The ridge 52 will be explained later by reference to Fig. 6.

The middle-lifting board 50 is supported upward by ceramic supporting bars 54 of the same length arranged in suitable intervals along the delivery direction. In Fig. 3, the plural supporting bars 54 are shown in superposition, seemingly as one supporting bar 54. In Fig. 4, two supporting bars 54 are shown. The supporting bars 54 are fixed at the top ends 54a to the bottom of the middle-lifting board 50, and extend downward. The supporting bars 54 are fixed at the lower ends 54b to a connecting bar 55 extending parallel to the delivery direction (arrow-A direction). The connecting bar 55 has a rectangular cross-section. A circular cam (eccentric cam) 56 is placed under the lengthwise middle portion of the connecting bar 55. The cam 56 may be ellipsoidal.

The peripheral face of the cam 56 is in contact with the lower face of the connecting bar 55. The cam 56 is fixed eccentrically to a rotation shaft 42. The rotation shaft 42 extends perpendicularly to both of the supporting bars 54 and the connecting bar 55 (in the direction of the breadth of the middle-lifting board 50). The one end 42a of the rotation shaft 42 is coupled through a coupling 44 with a motor 46. The other end 42b of the rotation shaft 42 and the portion of the rotation shaft 42 at the inside from the coupling 44 toward the end 42b are respectively supported rotatably by bearings 45,45. The motor 46 and the bearings 45,45 are fixed to a pedestal 48.

The motor drives the coupling 44 and the rotation shaft 42 to rotate, and the rotation shaft 42 drives the cam 56 to rotate. The rotating cam 56, which is eccentric and is in contact at the periphery of the cam 56 with the lower face of the connecting bar 55, drives the connecting bar 55 in the arrow-C direction to pulsate vertically (upward and downward, perpendicular to the paper face of Fig. 5). The vertical pulsating movement of the connection bar 55 allows the supporting bars 54 to pulsate vertically, which allows the middle-lifting board 50 to pulsate vertically in the arrow-C direction. The higher rotation rate of the motor 46 allows the middle-lifting board 50 to pulsate vertically at a higher pulsation rate, whereas the lower rotation rate of the motor 46 allows the middle-lifting board 50 to pulsate vertically at a lower pulsation rate.

The two end-lifting boards 60,70 are placed symmetrically on both sides of the middle-lifting board 50, and are symmetric in the shape to each other. The two end-lifting boards 60,70 are allowed to pulsate precisely synchronously in the same manner. The end-lifting boards 60,70 have respectively a width corresponding to about 1/4 of the length of the coiled member 12. Herein the term "width" signifies the length perpendicular to the delivery direction. At the outside ends of the end-lifting boards 60,70 in the width direction, side walls 61,71 are provided.

The end-lifting boards 60,70 have ridges 62,72 respectively on the top faces thereof at a predetermined pitch P along the delivery path (in the delivery direction) as shown in Fig. 4. Here the term "pitch" signifies the distance between the tops of adjacent ridges 62 (72). The pitch P and the height of the ridges 62,72 are designed suitably for the outside diameter of the coiled member 12 to be delivered. The pitch P of the ridges 62 and that of the ridges 72 in the delivery direction are equal to each other as shown in Fig. 5. Although the pitch P of the ridges 52 of the middle-lifting board 50 and the pitches P of the ridges 62,72 of the end-lifting boards 60,70 are the same in the distance, the ridges 52 of the middle-lifting board 50 are displaced from the positions of the ridges 62,72 of the pair of the end-lifting boards 60,70 by a distance of P/2 in the delivery direction with the pitch size kept unchanged. The ridges 62,72 will be explained later by reference to Fig. 6.

The end-lifting boards 60,70 are supported upward, as shown in Fig. 3, by supporting ceramic rods 64,74 of the same length arranged at suitable intervals along the delivery direction in the same manner as the supporting bar 54. The supporting bars 64,74 are arranged in lines with the supporting bars 54. Therefore, in Fig. 4, the supporting bars 64,74 are shown in superposition on the supporting bars 54, so that the supporting bars 64,74 are not shown in the drawing. The supporting bars 64,74 are fixed at the top ends 64a,74a to the bottoms of the end-lifting boards 60,70, and extend downward. The lower ends 64b,74b of the supporting bars 64,74 are fixed to connecting bars 65,75 extending in the delivery direction (arrow-A direction). The connecting bars 65,75 have respectively a rectangular cross-section. An ellipsoidal cam (eccentric cam) 66,76 are placed in contact with the lengthwise middle portion of the connecting bars 65,75, similarly as the connecting bar 55.

The shapes of the cams 66,76 are the same as the shape of the cam 56, but the phase of the cam 56 is shifted from the phases of the cams 66,76 by 180°. The phases of the two cams 66,76 are the same. The peripheral faces of the cams are in contact with the lower face of the connecting bars 65,75. The cams 66,76 are fixed eccentrically to the aforementioned rotation shaft 42. Therefore, rotation of the motor 46 causes rotation of the rotation shaft 42 and rotation of the cams 66,76 to reciprocate the supporting bars 64,74 and to allow the end-lifting boards 60,70 to pulsate vertically.

The phases of the cams 66,76 and the phase of the cam 56 are shifted by 180° from each other as described above. Therefore, when the edge face portion of the cam 56 of the most distant from the rotation shaft 42 is at the highest position, the edge face portions of the cams 66,76 at the most distant position from the rotation shaft 42 are at the lowest position. Therefore, when the supporting bar 54 comes to the highest position, the two supporting bars 64,74 come to the lowest position. Consequently, when the middle-lifting board 50 is rising, the end-lifting boards 60,70 are falling, whereas when the middle-lifting board 50 reaches the highest position, the end-lifting boards 60,70 reach the lowest position. Conversely, when the middle-lifting board 50 is falling, the end-lifting boards 60,70 are rising, whereas when the middle-lifting board 50 reaches the lowest position, the end-lifting boards 60,70 reaches the highest position. The middle-lifting board 50 and the end-lifting boards 60,70 are designed to come to the same height level at the midpoint of the up-and-down movement.

Another constitution, as described above, is explained in which either the middle-lifting board 50 or the pair of the end-lifting boards 60,70 is allowed to pulsate vertically with the other being fixed, and the coiled members 12 are delivered by rolling on the slope of the ridges 52,62,72.

In a constitution in which the middle-lifting board 50 is fixed and the pair of the end-lifting boards 60,70 are allowed to pulsate vertically, the members for moving vertically the middle-lifting board 50, namely the supporting bars 54, the connecting bar 55, and the cam 56, are omitted, whereby the apparatus can be simplified correspondingly. In this constitution, the end-lifting boards 60,70 are allowed to pulsate vertically to move the tops of the ridges 62 and 72 repeatedly between levels higher than and lower than the tops of the ridges 52 of the middle-lifting board 50.

On the other hand, in another constitution in which the end-lifting boards 60,70 are fixed and the middle-lifting board 50 is allowed to pulsate vertically, the members for moving vertically the end-lifting boards 60,70, namely the supporting bars 64,74, the connecting bar 65,75, and the cams 66,76, are omitted, whereby the apparatus can be simplified correspondingly. In this constitution, the middle-lifting board 50 is pulsated vertically repeatedly to move the tops of the ridges 52 between levels higher than and lower than the tops of the ridges 62,72.

The delivery of the coiled members 12 by rolling by the middle-lifting board 50 and the end-lifting boards 60,70 is explained by reference to Fig. 6.

Fig. 6 is schematic view of a part of the middle-lifting board and the end-lifting boards. In Fig. 6, the same symbols as in Figs. 3-5 are used for denoting the corresponding constitutional elements.

The shapes of the ridges 52 of the middle-lifting board 50, the ridges 62,72 of the end-lifting boards 60,70 are identical. As shown in Fig. 2, the ridges 52,62,72 have respectively a slope 52a, 62a, or 72a facing toward the delivery direction (arrow-A direction) and another slope 52b, 62b, or 72b facing toward the reverse of the delivery direction. As described before, the pitches P of the ridges 52,62,72 are the same: The tops of the ridges 52 or the pair of ridges 62,72 are displaced to each other by a half pitch (P/2) alternately.

In Fig. 6, a coiled member 12 is placed on the slope 52a of the ridge 52 and is simultaneously in contact with the slope 52b of the adjacent ridge. In Fig. 6, the symbol "V" denotes a perpendicular line passing the center 12a of the coiled member 12; θ1 denotes the angle between the perpendicular line V and the line connecting the contact point of the coiled member 12 with the slope 52a and the center 12a; θ2 denotes the angle between the perpendicular line V and the line connecting the point of contact of the coiled member 12 with the slope 52b and the center 12a; L1 denotes the distance between the point of contact of the coiled member 12 with the slope 52b and the top of the ridge 52 of the slope 52b; L2 denotes the distance between the point of contact of the coiled member 12 with the slope 52a and the top of the ridge 52 of the slope 52a; and D denotes the outside diameter of the coiled member 12. The shape of the ridges 52,62,72 is designed to satisfy the relation represented by Equation 1 below.

**Equation 1**

$$\theta = \cfrac{\pi \cdot D \, \cfrac{(\theta 1 + \theta 2)}{360} + L1 + L2}{\pi \cdot D} \nleq 180°, \ 360°$$

In Fig. 6, the symbol "t" denotes the distance (gap) between a coiled member 12 held on the slope 52a of a first ridge 52 and in contact with the slope 52b of an adjacent second ridge 52 and another coiled member 12" held on the slope 52b of a second adjacent ridge 52 and in contact with the slope 52b of a succeeding third ridge. The ridges 52,62,72 are designed such that P (pitch) = D (outside diameter of coiled member 12) + t. Incidentally, when P<D, adjacent coiled members 12 are placed on the delivery path 22 with intervals of more than one pitches to prevent the contact (collision) between the adjacent coiled members. In other words, when P<D, the adjacent coiled members 12 are placed with plural ridges 52 (or 62,72) existing between the coiled members.

Further, the distance "S" is defined as the horizontal distance from the center 12a of the coiled member 12 supported on the slope 52a of one ridge 52 and in contact with the slope 52b of the adjacent ridge 52 to the top of the ridge 62 (or 72) between the ridge 52 and the adjacent ridge 52. The ridges 52,62,72 are designed to be S>0.

With the above constitution of the ridges 52,62,72, the middle-lifting board 50 and the end-lifting boards 60,70 are moved vertically in alternate directions. Thereby, the coiled members 12 are delivered by rolling by the distance of one pitch P of the ridges 52,62,72 of the middle-lifting board 50 and the end-lifting boards 60,70. In this rolling delivery, the coil member 12 is turned not to cause one rotation or a half rotation. Therefore, the entire of the coiled members 12 are induction heated uniformly without repeated access of a local part of the coiled members 12 to the induction heating coil 24.

In the upstream side of the delivery path 22, a delivery device (not shown in the drawing) is provided for loading the coiled members 12 onto the delivery path 22. From the delivery device, coiled members 12 are brought successively onto the most upstream position of the delivery path 22. The coil members 12 are placed on the delivery path 22 as shown in Fig. 6. In the state shown in Fig. 6, the middle-lifting board 50 is at the highest level of the pulsation, and the end-lifting boards 60,70 are at the lowest level. For delivery of the coiled members 12 in this state by rolling, the middle-lifting board 50 is moved downward and the end-lifting boards 60,70 is moved upward. By this vertical movement of the boards, the coil members 12 are /rolled on the slope 62a,72a of the ridges 62,72 of the end-lifting boards 60,70.

Successively, the rising end-lifting boards 60,70 reach the highest level and the falling middle-lifting board 50 reaches the lowest level momentarily. Immediately thereafter, the middle-lifting board 50 comes to be moved upward and the end-lifting boards 60,70 come to be moved downward. At the moment when the movement directions are changed, the coiled member 12 is placed at the top of the ridge 52 of the middle-lifting board 50. This state is shown by the coiled member 12' in Fig. 6. Immediately thereafter, the coiled member 12' begins to roll downward to be delivered by rolling to the position shown by the coiled member 12". In such a manner, the coiled member 12 is delivered by rolling by repetition of the reversed up-and-down movement of the middle-lifting board 50 and the end-lifting boards 60,70.

In delivery of the coil member 12 as above, the middle-lifting board 50 and the end-lifting boards 60,70 are moved in the opposite directions, so that the up-and-down displacement of the central line 12a of the coiled member 12 is minimized. Thereby, the variation can be minimized of the distance between the delivered coiled member 12 and the induction heating coil 24 (Figs. 1 and 2) during the delivery of the coiled member 12. Otherwise, the vertical displacement of the center line 12a can be decreased by shortening the pitch P, or by decreasing the inclination angle of the slope 52a,62a,72a (by lowering the ridges 52,62,72). In the case where the pitch P is shortened or the angles of the slopes 52a,62a,72a are decreased (the ridges 52,62,72 are lowered), the apparatus may be constituted such that either the middle-lifting board 50 or the pair of the end-lifting boards 60,70 is pulsated vertically and the other may be fixed to deliver the coiled members 12 by rolling on the slopes of the ridges 52,62,72 as mentioned later.

As described above, many coiled members 12 are delivered by rolling along the delivery path 22. Thereby, during the delivery, the parts of the peripheral faces of the coiled member 12 come to face the induction heating coil 24 at nearly the same frequency. As the results, the entire of the coiled member 12 is induction heated uniformly without nonuniform heating.

EXAMPLE 2

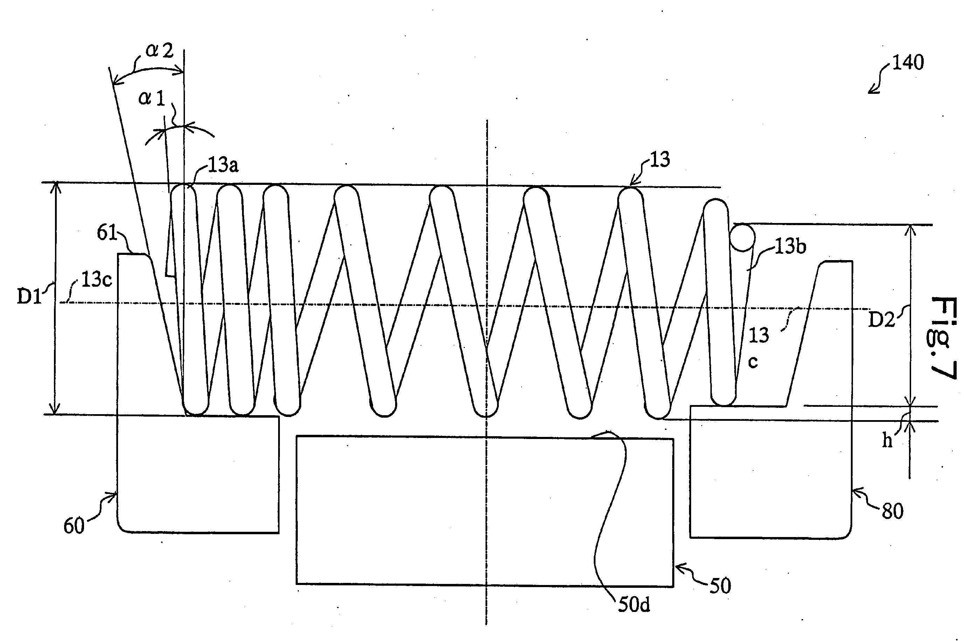

Example 2 is explained by reference to Fig. 7.

Fig. 7 is a front view of the delivery unit of the induction heating apparatus of Example 2. In Fig. 7, the same symbols as in Figs. 1-6 are used for denoting the corresponding constitutional elements.

This delivery unit 140 delivers smoothly, by rolling, a coiled member 13 having an outside diameter D1 at the one lengthwise end 13a and an outside diameter D2 smaller than D1 at the other lengthwise end 13b, being modified for the delivery. The delivery unit 140 has end-lifting boards 60,80 and a middle-lifting board 50. The one end-lifting board 60 which supports upward the one lengthwise end 13a of the coiled member 13 and moves it vertically has the same constitution as the end-lifting board 60 of the delivery unit 40. However, the other end-lifting board 80 is different in constitution from the end-lifting board 70: The end-lifting board 80 is placed at a higher level by a height h than the end-lifting board 60. This difference in height is explained below.

The outside diameter of the coiled member 13 at the one end 13a is represented by D1, and the outside diameter thereof at the other end 13b is represented by D2. The straight line connecting the center of the outside diameter D1 and the center of the outside diameter D2 is referred to as a center line 13c. With this coiled member, the height h is shown by the equation: h = (D1-D2)/2 or h (D1-D2)/2. With the end-lifting board 80 and the end-lifting board 60 having the height levels adjusted as above, the center line 13c of the coiled member 13 is kept to be nearly parallel to the upper face 50c of the middle-lifting board 50, whereby the coiled members 13 are delivered smoothly by rolling.

At the edge sides of the end-lifting boards 60,80 in the width direction, side walls 61,81 are provided. The clearance angle $\alpha2$ of the side wall 61 is larger than the initial bending angle $\alpha1$ of the coil spring 13. This enables rolling of the coiled member 13 without contact of the lengthwise end 13a of the coiled member 13 with the side wall, and thereby the coiled member 13 can be delivered smoothly by rolling. The side wall 81 is the same as above.

Some coiled member 13 has different outside diameters at the lengthwise end portions 13a and 13b. For such a coiled member, the middle-lifting board 50 and the end-lifting boards 60,80 are placed to keep equal the heights of the center of the lengthwise end 13a and of the center of the other lengthwise end 13b. The equality of the heights of the center of the lengthwise end 13a and of the center of the lengthwise end 13b herein signifies that the center line 13c is horizontal precisely or approximately.

EXAMPLE 3

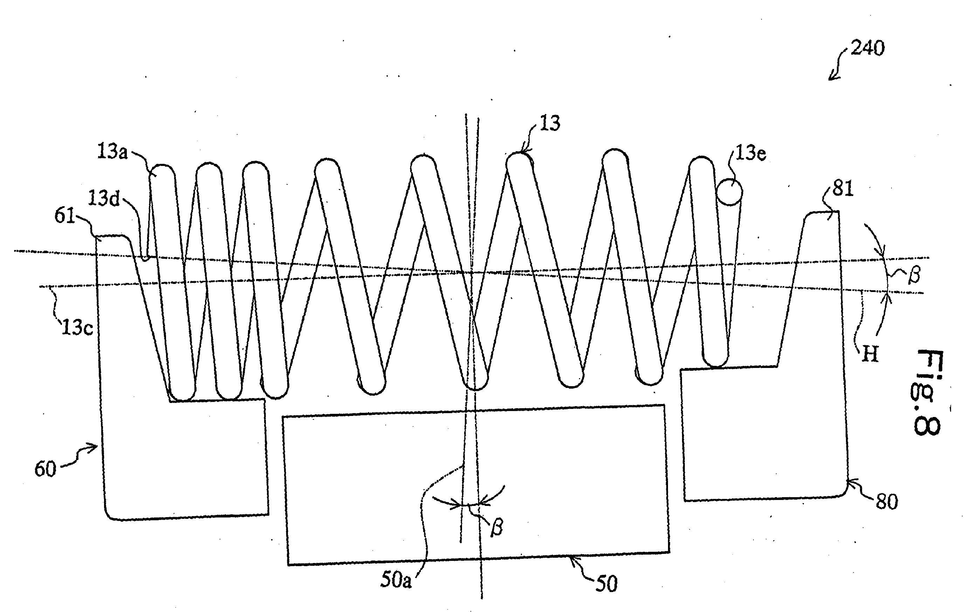

Example 3 is explained by reference to Fig. 8.

Fig. 8 is a front view of the delivery unit of the induction heating apparatus of Example 3. In Fig. 8, the same symbols as in Figs. 7 are used for denoting the corresponding constitutional elements.

The coiled member 13 delivered by this delivery unit 240 has been cut to have cut sectional faces 13d,13e at the respective lengthwise ends formed in cutting in a prescribed length. In this explanation, the delivery is directed from the back side to the front side of the paper face of Fig.8. The coiled member 13 is delivered by rolling from the back side to the front side of the paper face of Fig. 8. In the delivery in such a manner, touch of the sectional face 13e with the side wall 81 will hinder the rolling of the coiled member 13. To prevent the touch of the sectional face 13e to the side wall 81, the entire of the middle-lifting board 50 and the end-lifting boards 60,80 is inclined by an angle $\beta$.

The entire of the delivery unit 240 is inclined by an angle $\beta$ relative to the center line 50a in the width direction of 50a of the middle-lifting board 50 to place the end-lifting board 60 lower than the other end-lifting board 80. Therefore, by reference to the horizontal line H, the center line 13c of the coiled member 13 is inclined by an angle $\beta$. Thereby, the center of the lengthwise end 13a is placed lower than the center of the other lengthwise end 13b. The angle $\beta$ ranges from 2° to 30° , preferably from 4° to 10° .

In delivery of the coil members 13 by rolling with the delivery unit 240 inclined entirely by an angle $\beta$, the sectional face 13d will not come to touch with the side wall 61 even if it comes close to the side wall 61 and will go apart therefrom without contact. Therefore, a coiled member 13 having outside diameters different between the both lengthwise ends can be delivered smoothly by rolling.

As described above, some of coiled members 13 have diameters different between a lengthwise end 13a and the other lengthwise end 13b. For delivery of such a coiled member, the middle-lifting board 50 and the end-lifting boards 60,80 are inclined to bring the center of the one lengthwise end 13a and the center the other lengthwise end 13b to the same level. The state in which the center of the one lengthwise end 13a and the center of the other lengthwise end 13b are at the same height level signifies that the center line 13c is precisely or nearly horizontal.

INDUSTRIAL AVAILABILITY

In the induction heating method of the present invention, an induction heating coil and a coiled member to be heated are placed in opposition. Therefore the induction current is allowed to flow in rotation only in the cross-section of the coiled wire without causing a short-circuit current at the both ends of the coiled member. In other words, in the induction heating method of the present invention, no short-circuit current is caused at the both ends of the coiled member since the induction heating coil and the coiled member are not placed coaxially. Further, in the induction heating method of the present invention, since the coiled members are delivered by rolling along the delivery path, the portions of the peripheral face of the coiled member are allowed to face the induction heating coil at equal frequency to be induction heated uniformly. Therefore, the entire of the coiled member (the entire of the peripheral layer) is uniformly induction heated without irregular heating of the coiled member.

In the induction heating apparatus of the present invention, the coiled member is induction heated during delivery by rolling by the delivery means, so that the coiled member is induction heated uniformly. Therefore, the entire of the coiled member (the entire of the peripheral layer) is uniformly induction heated without irregular heating of the coiled member.

**Claims**

1.   An induction heating method for induction heating a helix-shaped coiled member (12), comprising:

delivering the helix-shaped coiled member (12) by delivering means along a delivery path (22) by rolling it along its peripheral perimeter, and
induction heating the coiled member by an induction heating coil (24) helically surrounding the delivery path (22), when the coiled member (12) is delivered on the delivery path (22),

**characterized in that** the delivery means (40) comprise
middle-lifting means (50) having ridges (52) at a prescribed pitch (P) along the delivery path (22) for supporting the coiled member (12) upward at a lengthwise middle portion of the coiled member (12) and for lifting the coiled member (12) in the vertical direction, and
a pair of end-lifting means (60, 70) having ridges (62, 72) at the prescribed pitch (P) along the delivery path (22) for supporting the coiled member (12) upward at both lengthwise end portions and for moving the coiled member (12) in the vertical direction,
wherein the ridges (52) of the middle-lifting means and the ridges (62, 72) of the end-lifting means are placed alternately in the direction of the delivery path (22); and
wherein the coiled member (12) is delivered by moving at least one of the middle-lifting means (50) and the pair of end-lifting means (60, 70) such that the middle-lifting means (50) and the pair of end-lifting means (60, 70) move, relative to each other, alternately up and down in the vertical direction so as to allow the coiled member (12) to roll forward on slopes (52a, 62a, 72a) between the ridges (52, 62, 72).

2.   The method according to claim 1, wherein the delivery path (22) for delivering the coiled member (12) by rolling is inclined such that one of the end-lifting means (60, 70) is placed at a higher position than the other one.

3.   The method according to claim 1 or 2,
wherein the pitch (P) of the ridges of the middle-lifting means and of the end-lifting means is designed such that the coiled member (12) does not roll between the ridges (52, 62, 72) with a full or a half rotation.

4.   The method according to any of claims 1 to 5,
wherein the coiled member (12) has an outside diameter differing between the two ends in its length direction, and
wherein the pair of end-lifting means (60, 70) are arranged to hold the centers of the ends of the coiled member (12) at the same height by inclining the end-lifting means (60, 70) and the middle-lifting means (50) in a direction perpendicular to the delivery path (22).

5.   The method according to claim 4, wherein the coiled member (12) has an outside diameter increasing in the length direction from the one end toward the other one.

6.   The method according to any of claims 1 to 5,
wherein the delivery means comprise a pair of side walls (61, 71) rising up at respective ends of the delivery path (22) in the width direction, and
wherein the coiled member (12) comprises cut faces (13d, 13e) at the respective ends of a predetermined length in the length direction and rolls without the cut faces (13d, 13e) contacting the side walls (61, 71).

7. An induction heating apparatus, comprising

a delivery means (40) for delivering a helix-shaped coiled member (12) along a delivery path (22) by rolling it along its peripheral perimeter, and

an induction heating coil (24) for induction heating the coiled member (12) being delivered by the delivery means (40), the induction heating coil (24) helically surrounding the delivery path (22),

**characterized in that** the delivery means (40) comprise

middle-lifting means (50) having ridges (52) at a prescribed pitch (P) along the delivery path (22) for supporting the coiled member (12) upward at a lengthwise middle portion of the coiled member (12) and for lifting the coiled member (12) in the vertical direction, and

a pair of end-lifting means (60, 70) having ridges (62, 72) at the prescribed pitch (P) along the delivery path (22) for supporting the coiled member (12) upward at both lengthwise end portions and for moving the coiled member (12) in the vertical direction,

wherein the ridges (52) of the middle-lifting means (50) and the ridges (62, 72) of the end-lifting means (60, 70) are placed alternately in the direction of the delivery path (22); and

wherein the delivery means (40) are adapted to deliver the coiled member (12) by moving at least one of the middle-lifting means (50) and the pair of end-lifting means (60, 70) such that the middle-lifting means (50) and the pair of end-lifting means (60, 70) move, relative to each other, alternately up and down in the vertical direction so as to allow the coiled member (12) to roll forward on slopes (52a, 62a, 72a) between the ridges (52, 62, 72).

8. The apparatus according to claim 7, wherein the delivery path (22) for delivering the coiled member (12) by tolling is inclined such that one of the end-lifting means (60, 70) is placed at a higher position than the other one.

9. The apparatus according to claim 7 or 8,

wherein the pitch (P) of the ridges of the middle-lifting means and of the end-lifting means is designed such that the coiled member (12) does not roll between the ridges (52, 62, 72) with a full or a half rotation.

10. The apparatus according any of claims 7 to 9,

wherein the pair of end-lifting means (60, 70) are arranged to hold the centers of the ends of a coiled member with an outside diameter differing between the two ends in its length direction (12) at the same height by inclining the end-lifting means (60, 70) and the middle-lifting means (50) in a direction perpendicular to the delivery path (22).

11. The apparatus according to any of claims 7 to 10,

wherein the delivery means comprise a pair of side walls (61, 71) rising up at respective ends of the delivery path (22) in the width direction and being ranged such that a coiled member (12) with cut faces (13d, 13e) at the respective ends in a predetermined length in the length direction rolls without the cut faces (13d, 13e) contacting the side walls (61, 71).

12. A quench-hardening apparatus, comprising

an induction heating apparatus according to any of any of claims 7 to 11, and

a quenching vessel (34) for quenching the coiled member (12) having been heated to a prescribed hardening temperature by the induction heating apparatus (24).


**Patentansprüche**

1. Induktionserwärmungsverfahren zur Induktionserwärmung eines helixförmigen gespulten Elements (12) umfassend:

Zuführen des helixförmigen gespulten Elements (12) durch eine Zuführungseinrichtung entlang eines Zuführungspfads (22), indem es entlang seines äußeren Umfangs gerollt wird, und

Induktionserwärmen des gespulten Elements mittels einer Induktionserwärmungsspule (24), die den Zuführungspfad (22) wendelförmig umgibt, während das gespulte Element (12) auf dem Zuführungspfad (22) zugeführt wird,

**gekennzeichnet dadurch, dass** die Zuführungseinrichtung (40) umfasst:

eine mittlere Anhebungseinrichtung (50) mit Erhöhungen (52) in einem vorgegebenen Abstand (P) entlang des Zuführungspfads (22) zum Halten des gespulten Elements (12) nach oben an einem in Längsrichtung mittleren Abschnitt des gespulten Elements (12) und zum Anheben des gespulten Elements (12) in der vertikalen Richtung, und

ein Paar von äußeren Anhebungseinrichtungen (60, 70) mit Erhöhungen (62, 72) in dem vorgegebenen Abstand (P) entlang des Zuführungspfads (22) zum Halten des gespulten Elements (12) nach oben an beiden in Längsrichtung äußeren Abschnitten und zum Bewegen des gespulten Elements (12) in der vertikalen Richtung,

wobei die Erhöhungen (52) der mittleren Anhebungseinrichtung und die Erhöhungen (62, 72) der äußeren Anhebungseinrichtungen in der Richtung des Zuführungspfads (22) alternierend angeordnet sind; und

wobei das gespulte Element (12) durch Bewegen der mittleren Anhebungseinrichtung (50) und/oder des Paars von äußeren Anhebungseinrichtungen (60, 70) zugeführt wird, so dass die mittlere Anhebungseinrichtung (50) und das Paar von äußeren Anhebungseinrichtungen (60, 70) sich relativ zueinander alternierend in der vertikalen Richtung nach oben und nach unten bewegen, um das gespulte Element (12) so auf Neigungen (52a, 62a, 72a) zwischen den Erhöhungen (52, 62, 72) vorwärts rollen zu lassen.

2. Verfahren nach Anspruch 1, wobei der Zuführungspfad (22) zum Zuführen des gespulten Elements (12) durch Rollen geneigt ist, so dass eine der äußeren Anhebungseinrichtungen (60, 70) an einer höheren Position als die andere angeordnet ist.

3. Verfahren nach Anspruch 1 oder 2,
wobei der Abstand (P) der Erhöhungen der mittleren Anhebungseinrichtung und der äußeren Anhebungseinrichtungen so eingerichtet ist, dass das gespulte Element (12) zwischen der Erhöhungen (52, 62, 72) nicht mit einer vollen oder einer halben Rotation rollt.

4. Verfahren nach einem der Ansprüche 1 bis 5,
wobei das gespulte Element (12) einen Außendurchmesser aufweist, der an den beiden Enden in seiner Längsrichtung verschieden ist, und
wobei das Paar von äußeren Anhebungseinrichtungen (60, 70) dazu ausgelegt ist, die Mittelpunkte der Enden des gespulten Elements (12) auf der gleichen Höhe zu halten, indem die äußeren Anhebungseinrichtungen (60, 70) und die mittlere Anhebungseinrichtung (50) in einer zum Zuführungspfad (22) senkrechten Richtung geneigt sind.

5. Verfahren nach Anspruch 4, wobei das gespulte Element (12) einen Außendurchmesser aufweist, der in der Längsrichtung vom einen Ende zum anderen ansteigt.

6. Verfahren nach einem der Ansprüche 1 bis 5,
wobei die Zuführungseinrichtung ein Paar von Seitenwänden (61, 71) umfasst, die an den jeweiligen Enden des Zuführungspfads (22) in der Querrichtung aufsteigen, und
wobei das gespulte Element (12) Schnittflächen (13d, 13e) an den jeweiligen Enden einer vorgegebenen Länge in der Längsrichtung umfasst und rollt, ohne dass die Schnittflächen (13d, 13e) die Seitenwände (61, 71) berühren.

7. Induktionserwärmungsvorrichtung, umfassend
eine Zuführungseinrichtung (40) zum Zuführen eines helixförmigen gespulten Elements (12) entlang eines Zuführungspfads (22), indem es entlang seines Außenumfangs gerollt wird, und
eine Induktionserwärmungsspule (24) zur Induktionserwärmung des gespulten Elements (12), das von der Zuführungseinrichtung (40) zugeführt wird, wobei die Induktionserwärmungsspule (24) den Zuführungspfad (22) wendelförmig umgibt,
**gekennzeichnet dadurch, dass** die Zuführungseinrichtung (40) umfasst:

eine mittlere Anhebungseinrichtung (50) mit Erhöhungen (52) in einem vorgegebenen Abstand (P) entlang des Zuführungspfads (22) zum Halten des gespulten Elements (12) nach oben an einem in Längsrichtung mittleren Abschnitt des gespulten Elements (12) und zum Anheben des gespulten Elements (12) in der vertikalen Richtung, und

ein Paar von äußeren Anhebungseinrichtungen (60, 70) mit Erhöhungen (62, 72) in dem vorgegebenen Abstand (P) entlang des Zuführungspfads (22) zum Halten des gespulten Elements (12) nach oben an beiden in Längsrichtung äußeren Abschnitten und zum Bewegen des gespulten Elements (12) in der vertikalen Richtung,

wobei die Erhöhungen (52) der mittleren Anhebungseinrichtung (50) und die Erhöhungen (62, 72) der äußeren Anhebungseinrichtungen (60, 70) in der Richtung des Zuführungspfads (22) alternierend angeordnet sind; und
wobei die Zuführungseinrichtung (40) dazu ausgelegt ist, das gespulte Element (12) durch Bewegen der mittleren Anhebungseinrichtung (50) und/oder des Paars von äußeren Anhebungseinrichtungen (60, 70) zuzuführen, so dass sich die mittlere Anhebungseinrichtung (50) und das Paar von äußeren Anhebungseinrichtungen (60, 70) relativ zueinander alternierend in der vertikalen Richtung nach oben und nach unten bewegen, um so das gespulte Element (12) auf Neigungen (52a, 62a, 72a) zwischen den Erhöhungen (52, 62, 72) vorwärts rollen zu lassen.

8. Vorrichtung nach Anspruch 7, wobei der Zuführungspfad (22) zum Zuführen des gespulten Elements (12) durch Rollen geneigt ist, so dass eine der äußeren Anhebungseinrichtungen (60, 70) an einer höheren Position als die andere angeordnet ist.

9. Vorrichtung nach Anspruch 7 oder 8,
wobei der Abstand (P) der Erhöhungen der mittleren Anhebungseinrichtung und der äußeren Anhebungseinrichtungen so eingerichtet ist, dass das gespulte Element (12) zwischen den Erhöhungen (52, 62, 72) nicht mit einer vollen oder einer halben Rotation rollt.

10. Vorrichtung nach einem der Ansprüche 7 bis 9,
wobei das Paar von äußeren Anhebungseinrichtungen (60, 70) dazu ausgelegt ist, die Mittelpunkte der Enden eines gespulten Elements mit einem an den beiden Enden in seiner Längsrichtung (12) verschiedenen Außendurchmesser auf der gleichen Höhe zu halten, indem die äußeren Anhebungseinrichtungen (60, 70) und die mittlere Anhebungseinrichtung (50) in einer zum Zuführungspfad (22) senkrechten Richtung geneigt sind.

11. Vorrichtung nach einem der Ansprüche 7 bis 10,
wobei die Zuführungseinrichtung ein Paar von Seitenwänden (61, 71) aufweist, die an den jeweiligen Enden des Zuführungspfads (22) in der Querrichtung aufsteigen und so ausgelegt sind, dass ein gespultes Element (12) mit Schnittflächen (13d, 13e) an den jeweiligen Enden bei einer vorgegebenen Länge in der Längsrichtung rollt, ohne dass die Schnittflächen (13d, 13e) die Seitenwände (61, 71) berühren.

12. Abschreckhärtungsvorrichtung, umfassend:

eine Induktionserwärmungsvorrichtung nach einem der Ansprüche 7 bis 11 und
einen Abschreckbehälter (34) zum Abschrecken des gespulten Elements (12), das durch die Induktionserwärmungsvorrichtung (24) auf eine vorgeschriebene Härtungstemperatur erwärmt worden ist.

## Revendications

1. Procédé de chauffage par induction pour chauffer par induction un élément enroulé en forme d'hélice (12), comprenant :

la délivrance de l'élément enroulé en forme d'hélice (12) par des moyens de délivrance le long d'un trajet de délivrance (22) en faisant rouler celui-ci le long de son périmètre périphérique, et
le chauffage par induction de l'élément enroulé par un enroulement de chauffage par induction (24) entourant de façon hélicoïdale le trajet de délivrance (22), lorsque l'élément enroulé (12) est délivré sur le trajet de délivrance (22),

**caractérisé en ce que** les moyens de délivrance (40) comprennent :

des moyens de soulèvement médians (50) comportant des arêtes (52) à un pas prescrit (P) le long du trajet de délivrance (22) pour supporter l'élément enroulé (12) vers le haut au niveau d'une partie médiane dans le sens de la longueur de l'élément enroulé (12) et pour soulever l'élément enroulé (12) dans la direction verticale, et une paire de moyens de soulèvement d'extrémité (60, 70) comportant des arêtes (62, 72) au pas prescrit (P) le long du trajet de délivrance (22) pour supporter l'élément enroulé (12) vers le haut au niveau des deux parties d'extrémité dans le sens de la longueur et pour déplacer l'élément enroulé (12) dans la direction verticale, les arêtes (52) des moyens de soulèvement médians et les arêtes (62, 72) des moyens de soulèvement d'extrémité étant disposées en alternance dans la direction du trajet de délivrance (22) ; et l'élément enroulé (12) étant délivré par déplacement d'au moins l'un parmi les moyens de soulèvement médians (50) et la paire de moyens de soulèvement d'extrémité (60, 70) de telle sorte que les moyens de soulèvement médians (50) et la paire de moyens de soulèvement d'extrémité (60, 70) se déplacent les uns par rapport aux autres, alternativement vers le haut et vers le bas dans la direction verticale, de façon à permettre à l'élément enroulé (12) de rouler vers l'avant sur des pentes (52a, 62a, 72a) entre les arêtes (52, 62, 72).

**2.** Procédé selon la revendication 1, dans lequel le trajet de délivrance (22) pour délivrer l'élément enroulé (12) par roulement est incliné de telle sorte que l'un des moyens de soulèvement d'extrémité (60, 70) soit disposé à une position supérieure à celle de l'autre.

**3.** Procédé selon la revendication 1 ou 2,
dans lequel le pas (P) des arêtes des moyens de soulèvement médians et des moyens de soulèvement d'extrémité est conçu de telle sorte que l'élément enroulé (12) ne roule pas entre les arêtes (52, 62, 72) avec une rotation complète ou une demi-rotation.

**4.** Procédé selon l'une quelconque des revendications 1 à 5,
dans lequel l'élément enroulé (12) a un diamètre extérieur différent entre les deux extrémités dans la direction de sa longueur, et
dans lequel la paire de moyens de soulèvement d'extrémité (60, 70) sont disposés de façon à maintenir les centres des extrémités de l'élément enroulé (12) à la même hauteur par inclinaison des moyens de soulèvement d'extrémité (60, 70) et des moyens de soulèvement médians (50) dans une direction perpendiculaire au trajet de délivrance (22).

**5.** Procédé selon la revendication 4, dans lequel l'élément enroulé (12) a un diamètre extérieur qui augmente dans la direction de la longueur à partir de la première extrémité vers l'autre.

**6.** Procédé selon l'une quelconque des revendications 1 à 5,
dans lequel les moyens de délivrance comprennent une paire de parois latérales (61, 71) s'élevant à des extrémités respectives du trajet de délivrance (22) dans la direction de la largeur, et
dans lequel l'élément enroulé (12) comprend des faces coupées (13d, 13e) aux extrémités respectives d'une longueur prédéterminée dans la direction de la longueur et roule sans que les faces coupées (13d, 13e) ne viennent en contact avec les parois latérales (61, 71).

**7.** Appareil de chauffage par induction, comprenant :

des moyens de délivrance (40) pour délivrer un élément enroulé en forme d'hélice (12) le long d'un trajet de délivrance (22) en faisant rouler celui-ci le long de son périmètre périphérique, et
un enroulement de chauffage par induction (24) pour chauffer par induction l'élément enroulé (12) qui est délivré par les moyens de délivrance (40), l'enroulement de chauffage par induction (24) entourant de façon hélicoïdale le trajet de délivrance (22),

**caractérisé en ce que** les moyens de délivrance (40) comprennent :

des moyens de soulèvement médians (50) comportant des arêtes (52) à un pas prescrit (P) le long du trajet de délivrance (22) pour supporter l'élément enroulé (12) vers le haut au niveau d'une partie médiane dans le sens de la longueur de l'élément enroulé (12) et pour soulever l'élément enroulé (12) dans la direction verticale, et
une paire de moyens de soulèvement d'extrémité (60, 70) comportant des arêtes (62, 72) au pas prescrit (P) le long du trajet de délivrance (22) pour supporter l'élément enroulé (12) vers le haut au niveau des deux parties d'extrémité dans le sens de la longueur et pour déplacer l'élément enroulé (12) dans la direction verticale,
les arêtes (52) des moyens de soulèvement médians (50) et les arêtes (62, 72) des moyens de soulèvement d'extrémité (60, 70) étant disposées en alternance dans la direction du trajet de délivrance (22) ; et
les moyens de délivrance (40) étant adaptés pour délivrer l'élément enroulé (12) par déplacement d'au moins l'un parmi les moyens de soulèvement médians (50) et la paire de moyens de soulèvement d'extrémité (60, 70) de telle sorte que les moyens de soulèvement médians (50) et la paire de moyens de soulèvement d'extrémité (60, 70) se déplacent les uns par rapport aux autres, alternativement vers le haut et vers le bas dans la direction verticale, de façon à permettre à l'élément enroulé (12) de rouler vers l'avant sur des pentes (52a, 62a, 72a) entre les arêtes (52, 62, 72).

**8.** Appareil selon la revendication 7, dans lequel le trajet de délivrance (22) pour délivrer l'élément enroulé (12) par roulement est incliné de telle sorte que l'un des moyens de soulèvement d'extrémité (60, 70) soit disposé à une position supérieure à celle de l'autre.

**9.** Appareil selon la revendication 7 ou 8,
dans lequel le pas (P) des arêtes des moyens de soulèvement médians et des moyens de soulèvement d'extrémité est conçu de telle sorte que l'élément enroulé (12) ne roule pas entre les arêtes (52, 62, 72) avec une rotation complète ou une demi-rotation.

10. Appareil selon l'une quelconque des revendications 7 à 9,
dans lequel la paire de moyens de soulèvement d'extrémité (60, 70) sont disposés de façon à maintenir les centres des extrémités d'un élément enroulé avec un diamètre extérieur différent entre les deux extrémités dans la direction de sa longueur (12) à la même hauteur par inclinaison des moyens de soulèvement d'extrémité (60, 70) et des moyens de soulèvement médians (50) dans une direction perpendiculaire au trajet de délivrance (22).

11. Appareil selon l'une quelconque des revendications 7 à 10,
dans lequel les moyens de délivrance comprennent une paire de parois latérales (61, 71) s'élevant à des extrémités respectives du trajet de délivrance (22) dans la direction de la largeur, et agencées de telle sorte qu'un élément enroulé (12) avec des faces coupées (13d, 13e) aux extrémités respectives dans une longueur prédéterminée dans la direction de la longueur roule sans que les faces coupées (13d, 13e) ne viennent en contact avec les parois latérales (61, 71).

12. Appareil de durcissement à trempe, comprenant :

un appareil de chauffage par induction selon l'une quelconque des revendications 7 à 11, et
une cuve de trempe (34) pour tremper l'élément enroulé (12) qui a été chauffé à une température de durcissement prescrite par l'appareil de chauffage par induction (24).

Fig. 1

# Fig.2

# Fig.3

Fig.4

# Fig.5

# Fig.6

## Fig.7

# Fig.8

**EP 1 718 118 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2490206 A1